(19) Europäisches Patentamt
European Patent Office
Office européen des brevets

(11) **EP 4 425 219 A1**

(12) **EUROPEAN PATENT APPLICATION**
published in accordance with Art. 153(4) EPC

(43) Date of publication:
**04.09.2024 Bulletin 2024/36**

(21) Application number: **22886689.3**

(22) Date of filing: **12.10.2022**

(51) International Patent Classification (IPC):
**G01T 1/17** (2006.01)   **G01T 1/20** (2006.01)
**G01T 1/24** (2006.01)

(52) Cooperative Patent Classification (CPC):
**G01T 1/17; G01T 1/20; G01T 1/24**

(86) International application number:
**PCT/JP2022/037976**

(87) International publication number:
**WO 2023/074360 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.10.2021   JP 2021175897**

(71) Applicant: **RIKEN**
**Wako-shi, Saitama 351-0198 (JP)**

(72) Inventors:
• **HIRAKI, Toshiyuki**
  **Wako-shi, Saitama 351-0198 (JP)**
• **HATSUI, Takaki**
  **Wako-shi, Saitama 351-0198 (JP)**

(74) Representative: **Oak & Fox**
**94, rue La Fayette / Esc. D**
**75010 Paris (FR)**

(54) **RADIATION IMAGE SIGNAL PROCESSING METHOD, RADIATION IMAGE SIGNAL PROCESSING DEVICE, RADIATION IMAGING SYSTEM, AND PROGRAM**

(57)   Image signal processing capable of achieving effective data compression is performed while preventing degradation of data obtained in imaging using radiation. A radiation imaging system (100) includes an image sensor (105) having a sensitive surface on which a plurality of pixels are two-dimensionally arranged and outputs signals electrically converted at the pixels in response to incidence of radiation including image information as pixel values. In the radiation imaging system (100), one or more pixels that output significant electrical conversion signals derived from incident radiation are separated from pixels that output only signals due to noise specific to a sensor device based on a threshold that is statistically determined in advance. Then, pixel values due to noise are removed, and pixel values of significant signals are output as radiation image data.

Fig. 5

## Description

### Technical Field

The present invention relates to a radiation image signal processing method, a radiation image signal processing apparatus, a radiation imaging system, and a program, and, for example, relates to a radiation image signal processing method, a radiation image signal processing apparatus, a radiation imaging system, and a program for performing conversion processing on a high-speed broad-band image signal read from an image sensor for imaging.

### Background Art

In the fields of, for example, analysis of material structures or non-destructive inspection of micro-fabricated articles such as a semiconductor device, a radiation imaging system utilizing a highly-penetrative radiation such as an X ray has been used. Such a radiation imaging system typically includes a radiation source of an X ray or the like, an image sensor that receives radiation that has penetrated or diffractively scattered around a sample and converts the radiation into an image signal, and a signal processing system that processes the image signal to obtain an analysis image. Here, from the viewpoint of improvement in analysis accuracy and extended utilization, it is important that all components have consistent capabilities. Particularly, to catch up with a situation in which a large and high-intensity radiation source such as an Xray free electron laser (XFEL) has been developed, a high-performance image sensor which has a pixel array in the order of megapixel and which can support a wide dynamic range capable of detecting 1 to $10^8$ radiation beams per minute and a frame rate in the order of kHz, is being developed. Further, as an image sensor in this field, in order to avoid a so-called pile-up phenomenon, a charge-integrating sensor having a complementary metal-oxide-semiconductor (CMOS) structure is preferably used. The CMOS accumulates charges generated in response to radiation particles that are incident for a fixed exposure period and outputs image signals in accordance with the charges.

Meanwhile, when chemical change in a material, or the like, is to be observed in a high-performance radiation imaging system using the XFEL as described above as a radiation source, a large amount of data is read from the image sensor. Incidentally, in an X-ray imaging system in which an XFEL that radiates X-ray pulse laser light of 10 KeV is used as a light source and a camera system is constituted with an image sensor with a megapixel array, it is necessary to process a high-speed data signal of several giga bytes per second, captured at a frame rate of several kilohertz, which makes a data accumulation apparatus or a computer system for signal processing extremely huge and is not realistic. Thus, in order to avoid the system from becoming huge, a data compression technique is an essential requirement.

On the other hand, enormous data read from the image sensor contains noise components specific to a semiconductor device that constitutes a sensor device. Thus, in order to efficiently compress image data, it is preferable to convert data into a form appropriate for compression by removing pixel data representing pixel signal values due to only noise from raw data group read from respective pixels. In this respect, an approach of removing noise component before data compression as described conventionally in the following citation list is proposed.

### Citation List

### Patent Literature

Patent Literature 1: International Patent Publication No. WO 2019/064632

### Non Patent Literature

Non Patent Literature 1: M. Hammer et al., "Strategies for on-chip digital data compression for X-ray pixel detectors", Journal of Instrumentation, Volume 16, January 2021, P01025
Non Patent Literature 2: Ch. Broennimann et al., "The PILATUS 1M detector", 2006, Journal of Synchrotron Radiation, Volume 13, Issue 2, pp.120-130
Non Patent Literature 3: V. Radicci et al., "The International School for Advanced Studies (SISSA), find out more EIGER a new single photon counting detector for X-ray applications: performance of the chip", 2012, Journal of Instrumentation, Volume 7, C02019
Non Patent Literature 4: J. Hoff et al., "An on-chip charge cluster reconstruction technique in the miniVIPIC pixel readout chip for X-ray counting and timing", Proceedings in 2014 IEEE, Nuclear Science Symposium and Medical Imaging Conference (NSS/MIC), 1173-1183

Non Patent Literature 5: S. Cartier et al., "Micrometer-resolution imaging using MONCH: towards G2-less grating interferometry", 2016, Journal of Synchrotron Radiation 23, pp.1462-1473

Non Patent Literature 6: S. Cartier, "Development of a 25 micron pixel detector for phase-contrast imaging", 2017, PhD thesis

Non Patent Literature 7: G. W. Deptuch et al., "An Algorithm of an X-ray Hit Allocation to a Single Pixel in a Cluster and Its Test-Circuit Implementation", 2018, IEEE Transactions on Circuits and Systems I (TCSI), Volume 65, Issue 1, pp.185-197

Non Patent Literature 8: J. Jirsa et al., "Simulation of New Charge Summing and Hit Allocation Algorithm", Proceedings of Science, Topical Workshop on Electronics for Particle Physics

Non Patent Literature 9: H. Spieler, "Semiconductor Detector Systems", 2005, Oxford University Press, Section 2.2.2 & 2.7

## Summary of Invention

### Technical Problem

While data compression is effective to efficiently transfer and store broad-band data obtained from the high-quality image sensor as described above, it is required to compress data in a form in which noise components specific to the image sensor are removed while minimizing degradation of data derived from received radiation in this event. Specifically, data is compressed after removing noise from data read from the image sensor. At this time, when a high-energy ray such as an X ray from the XFEL described above is used, for example, signals with relatively low intensity which are difficult to be discriminated from noise, are generated in adjacent pixels around a pixel that has received radiation by a phenomenon which is referred to as so-called charge coupling.

In such a situation, various approaches for distinguishing noise from the signals with relatively low intensity that spread around the pixel on which radiation is incident due to incidence of the high-energy ray and removing the noise have been proposed in the related art. For example, an approach in which a pixel value (signal intensity) is compared with a threshold for each pixel and when the pixel value is smaller than the threshold, the pixel value is determined to be noise and removed is proposed (Non Patent Literatures 1 to 3). Further, an approach in which pixel values in a region including a plurality of pixels are discriminated using a threshold (Non Patent Literatures 4 to 8) also is proposed.

However, in these typical approaches, determination is unthinkingly made whether the pixel value corresponds to noise based on whether the pixel value is greater or smaller than the threshold that is unambiguously determined, and thus, an event may occur in which a significant pixel value that is not noise is removed, or a noise component is detected as false information depending on the setting of the threshold, which may deteriorate reliability of the detected signal. In other words, in the field of a radiation measurement technique with which structure analysis is performed or chemical reaction is observed at the atomic or molecular level of a substance, it is extremely important to accurately grasp information on radiation that has penetrated or scattered around an observation sample in units of photon or particle of radiation, and removal of significant pixel values that appear in pixels around a pixel on which radiation is incident due to a charge coupling phenomenon among noise causes a problem of degradation of reliability of an analysis result as well as degradation of image quality,

An object of the present invention, which has been made in view of the above-described circumstances, is to perform image signal processing capable of achieving efficient data compression while preventing degradation of data obtained in imaging by using radiation.

### Solution to Problem

A radiation image signal processing method according to one embodiment in a radiation imaging system which includes an image sensor having a sensitive surface on which a plurality of pixels are two-dimensionally arranged and which outputs signals electrically converted at the pixels in response to incidence of radiation containing image information as pixel values, includes separating one or more pixels that output significant electrical conversion signals derived from incident radiation from pixels that output only signals due to noise specific to a sensor device based on a threshold that is statistically determined in advance, removing pixel values due to noise and outputting pixel values of significant signals as radiation image data. This makes it possible to preferably remove pixel values due to noise while maintaining image information and obtain highly compressible image data.

A radiation image signal processing apparatus according to one embodiment in a radiation imaging system which includes an image sensor having a sensitive surface on which a plurality of pixels are two-dimensionally arranged and which outputs signals electrically converted at the pixels in response to radiation incident as image information as pixel values, includes a constant setting unit configured to determine a threshold for detecting noise components appearing in the respective pixels, and a threshold discrimination unit configured to discriminate pixels that output significant electrical conversion signals derived from incident radiation from pixels that output only signals due to noise specific to a sensor device based on the threshold from the constant setting unit, and the constant setting unit sets a signal obtained by statistically processing data obtained in advance to the threshold discrimination unit as the threshold. This makes it possible to preferably remove pixel values due to noise while maintaining image information and obtain highly compressible image data.

A radiation imaging system according to one embodiment includes a radiation source configured to irradiate an observation sample with radiation, a camera unit including an image sensor having a sensitive surface on which a plurality of pixels are two-dimensionally arranged, and an image signal processing unit configured to output signals electrically converted at the pixels in response to incidence of radiation containing information on the observation sample as pixel values, the image signal processing unit includes a constant setting unit configured to determine a threshold for detecting noise components appearing in the respective pixels, and a threshold discrimination unit configured to discriminate pixels that output significant electrical conversion signals derived from radiation from pixels that output only signals due to noise specific to a sensor device based on the threshold from the constant setting unit, and the constant setting unit sets a signal obtained by statistically processing data obtained in advance to the threshold discrimination unit as the threshold.

This makes it possible to preferably remove pixel values due to noise while maintaining image information and obtain highly compressible image data.

A program according to one embodiment in a radiation imaging system which includes an image sensor having a sensitive surface on which a plurality of pixels are two-dimensionally arranged and which outputs signals electrically converted at the pixels in response to incidence of radiation containing image information as pixel values, causes a computer included in the radiation imaging system to execute processing of separating one or more pixels that output significant electrical conversion signals derived from incident radiation from pixels that output only signals due to noise specific to a sensor device based on a threshold that is statistically determined in advance, and processing of removing pixel values due to noise and outputting pixel values of significant signals as radiation image data. This makes it possible to preferably remove pixel values due to noise while maintaining image information and obtain highly compressible image data.

**Advantageous Effects of Invention**

According to the present invention, it is possible to perform image signal processing capable of achieving effective data compression while preventing degradation of data obtained in imaging using radiation.

**Brief Description of Drawings**

Fig. 1 schematically illustrates a configuration of an X ray imaging system.
Fig. 2 schematically illustrates a partial configuration of a sensitive surface of an image sensor that is an X ray detector.
Fig. 3 schematically illustrates an example of pixel values appearing in pixels of a sensitive surface 10 when an X ray photon is incident.
Fig. 4 schematically illustrates a functional configuration of an image signal processing unit 140.
Fig. 5 is a flowchart of noise removal processing according to a first embodiment.
Fig. 6 is a diagram indicating the order of sweeping of a processing target region by a block including four pixels in the noise removal processing according to the first embodiment.
Fig. 7 is a diagram indicating distribution of pixel values before noise removal and distribution of pixel values after noise removal processing by typical threshold discrimination.
Fig. 8 is a diagram indicating distribution of pixel values before noise removal and distribution of pixel values after noise removal processing using a 2*2-sum method.
Fig. 9 is a flowchart of noise removal processing according to a second embodiment.
Fig. 10 is a diagram indicating the order of sweeping of pixels in the noise removal processing according to the second embodiment.
Fig. 11 is a diagram indicating distribution of pixel values before noise removal and distribution of pixel values after noise removal by typical threshold discrimination.
Fig. 12 is a diagram indicating distribution of pixel values before noise removal and distribution of pixel values after noise removal processing using a T2C method.
Fig. 13 is a flowchart of noise removal processing according to a third embodiment.
Fig. 14 illustrates a configuration example of a computer.

## Description of Embodiments

Embodiments of the present invention will be described below with reference to the drawings. In the respective drawings, the same components are denoted by the same reference numerals, and duplicate description will be omitted as necessary.

To put it simply, the gist of the present invention described below is an idea of separating one or more pixels that output significant electrical conversion signals derived from radiation incident on a sensitive surface of an image sensor from pixels that output only signals due to noise specific to a sensor device based on a threshold that is statistically determined and removing pixel values due to noise to generate a true radiation image data group appropriate for data compression. Further, the present invention has an idea of adding a fixed correction constant to pixel values to compensate for a deficit of significant information in association with removal of noise so that a sum of the pixel values of one or more adjacent pixels that output significant signals in response to incidence of radiation falls within a statistically predetermined range. Here, the threshold that is statistically determined and the correction constant are dynamically set as individual values in accordance with individual observation events.

Further, specifically, the present invention has, as a first feature, an idea of obtaining an addition signal by adding pixel values of four pixels in a block including two pixels in a vertical direction and two pixels in a horizontal direction adjacent each other to each pixel signal value from an image sensor having a pixel array type sensitive surface that receives radiation and performs photoelectric conversion, and then, sequentially comparing the addition signal with a predetermined threshold and removing pixel values due to noise in unit of block. In the present invention, a noise removal approach according to this first feature is referred to as a two by two sum (2*2-SUM) method. Further, the present invention has, as a second feature, an idea of comparing an output signal for each pixel from the image sensor with a first threshold determined based on a predetermined noise level to obtain an image signal by removing pixel values of noise components, and then, comparing the image signal with a second threshold that is lower than the first threshold again, generating an image signal by adding a correction constant to pixel values detected between the both thresholds and obtaining image data corresponding to information of incident radiation through correction addition using two thresholds. In the present invention, a noise removal approach according to this second feature is referred to as a threshold to correction (T2C) method.

The 2*2-SUM method according to the first feature and the T2C method according to the second feature have common technical significance to solve a problem of the related art that if an attempt is made to accurately grasp pixel values representing significant information, pixel values of noise components are included in an image data group, and if an attempt is made to completely remove the pixel values of the noise components, the significant information is lost. Further, in the both approaches, the threshold that becomes a basis of discrimination and the correction constant are obtained by statistically organizing a large amount of imaging data under various conditions including intensity of a radiation source, an image sensor and its exposure conditions, a reference sample, and the like, and are technically closely related to each other.

A radiation image signal processing apparatus having signal processing functions for executing such a processing method of a radiation image signal as hardware, a radiation imaging system, and a software program for executing the image signal processing method of the present invention by a computer are also included in the scope of the present invention. Note that while the radiation in the present invention includes all kinds of radiation such as an electron ray, an X ray, a γ ray, an ultraviolet ray, a neutron ray, and charged particle radiation, in the following description, an X ray will be described as a typical example.

First embodiment

(X-ray imaging system)

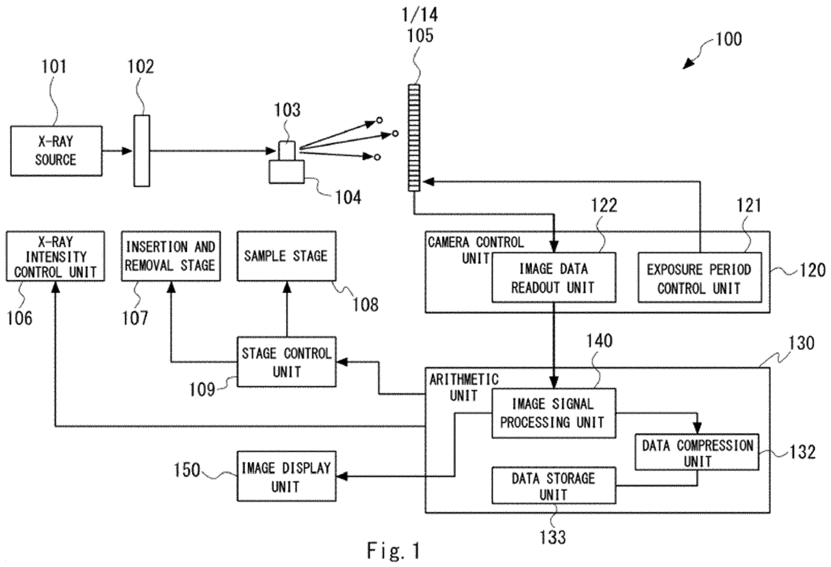

Fig. 1 schematically illustrates a configuration of an X-ray imaging system 100 according to the first embodiment. The X-ray imaging system 100 includes an X-ray source 101, an X-ray attenuation plate 102, a sample holder 104 that holds a sample 103 to be imaged, and an image sensor 105 that constitutes a camera unit disposed so that its optical axis is aligned with an X-ray radiated from the X-ray source, as basic components of a direct imaging scheme.

The X-ray source 101 is, for example, constituted as an X-ray free electron laser (XFEL) and generates coherent pulsed X-rays having high energy of 10 keV. The X-rays emitted from the X-ray source 101 penetrate the sample in accordance with the sample 103 and are appropriately attenuated at the X-ray attenuation plate 102 so that the image sensor is not destructed as a result of the scattered X-ray being directly incident.

An X-ray source intensity control unit 106 that controls intensity of the X-ray in response to a command from an arithmetic unit 130 described later is connected to the X-ray source 101. The X-ray attenuation plate 102 is held on an insertion and removal stage 107 which can be inserted and removed and which position can be controlled, the sample holder 104 is also held on a similar sample stage 108, and both stages are connected to a stage control unit 109 that operates in response to a command from the arithmetic unit 130.

On the other hand, in this case, a camera control unit 120 including an exposure period control unit 121 and an image data readout unit 122 that exchange command signals and data with the arithmetic unit (computer including a control function) 130 is connected to the image sensor 105 that performs a key role of the camera unit. The exposure period control unit 121 controls an exposure period so as to be able to widely support conditions from conditions in which at least one X-ray photon is incident for each pixel during 10000 frames to conditions in which several tens of X-ray photons are discretely incident on the sensitive surface of the image sensor 105 for each pixel during one frame. As an example, control is performed so that the frequency of in-pixel average incident photons with respect to an image sensor of 1024*1024 pixels becomes equal to or greater than $10^{-4}$ radiation/pixel/frame. This means that 100 or more X-ray photons are discretely incident for each frame on a sensitive surface of one million pixels. The image data readout unit 122 digitally converts the image signals from the image sensor 105 that repeats imaging operation at a frame rate in the order of kHz and reads the image signals at high speed and sends the image signals to the arithmetic unit 130.

If the sample 103 held on the sample holder 104 is irradiated with an X-ray from the X-ray source 101, the X-ray that has penetrated the sample 103 or has scattered around the sample 103 is incident on the sensitive surface of the image sensor 105 with intensity according to the sample 103. One photon of the X-ray discretely incident on the sensitive surface of the image sensor 105 in unit of photon is photoelectrically converted in one or more pixels (unit light receiving element), and the converted electrical signal is digitalized at the readout unit 122 that is incorporated or mounted on the image sensor 105 and read as image data.

Note that, for example, an imaging optical system such as a pin hole may be inserted as appropriate between the sample 103 and the image sensor 105 in accordance with resolution required for an image to be captured or an imaging scheme.

(Charge sharing with image sensor)

The image sensor 105 is constituted as a pixel array type and has a sensitive surface on which pixels (unit light receiving element) that receive and photoelectrically convert X-rays are two-dimensionally arranged. The image sensor for X-ray imaging has a basic configuration similar to that of an image sensor for visible light imaging and can be constituted as a semiconductor device having a configuration of a charge coupled device (CCD) or a complementary metal-oxide-semiconductor (CMOS). However, in the high-accuracy X-ray imaging system 100 that is a subject matter of the present invention, X-ray photons of one shot that are pulse-radiated from the XFEL that is the X-ray source 101 reach $10^{10}$ to $10^{11}$. Thus, the number of photons incident on the unit light receiving element that constitute the sensitive surface of the image sensor 105 may be a plurality of photons per frame depending on an exposure period. Thus, in order to accurately grasp energy of the incident X-ray photons, as the image sensor 105, a charge-integrating image sensor that accumulates charges for each pixel based on radiation incident within the exposure period and outputs corresponding electrical signals is more desirable than a so-called radiation counting type sensor.

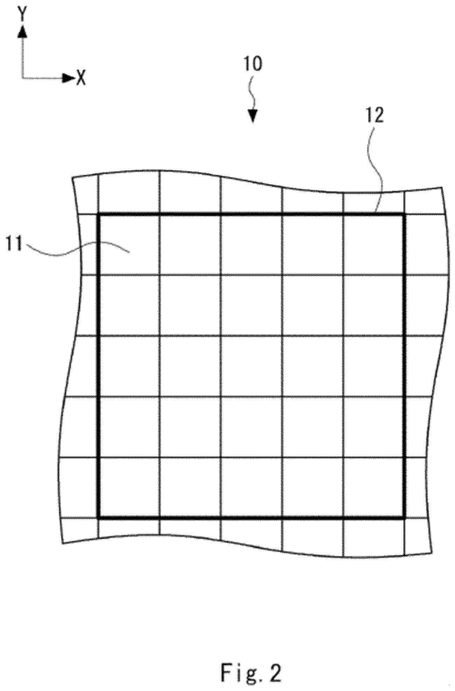

The configuration of the image sensor 105 will be described in detail. As described above, a plurality of pixels having a photoelectric conversion function are two-dimensionally arranged on the sensitive surface of the image sensor 105 as unit light receiving element. Fig. 2 schematically illustrates a partial configuration of the sensitive surface 10 of the image sensor 105. For example, if the number of pixels of the sensitive surface 10 is one million, then the pixels 11 are two-dimensionally arranged in 1024 rows * 1024 columns in the X direction and in the Y direction so as to compatible with digital processing. In this case, if the size of a pixel region (region in which pixels are arranged) of the sensitive surface is 10 mm * 10 mm, then the size of each unit light receiving element (pixel) is approximately 10 $\mu$m * 10 $\mu$m.

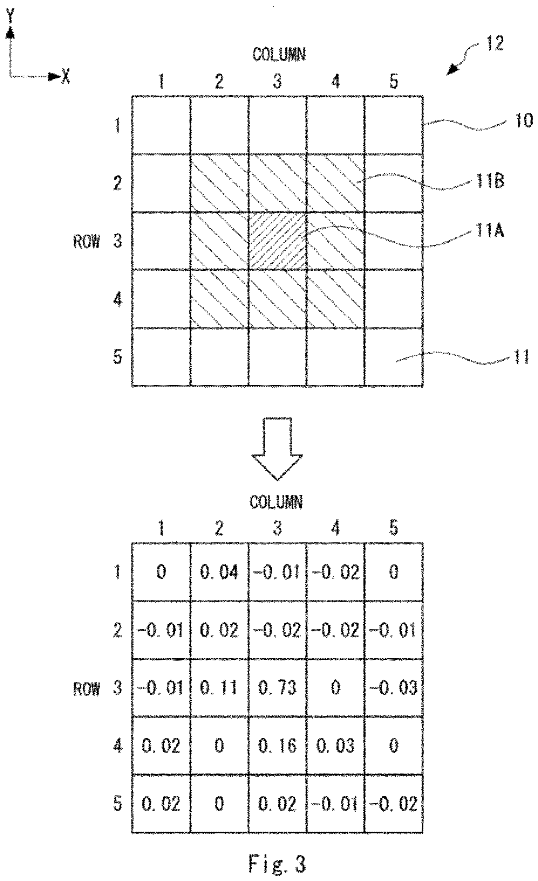

If one X-ray photon is incident on the sensitive surface 10 of the image sensor 105, then one X-ray photon is incident on one of the pixels (each unit light receiving element) 11. Fig. 3 schematically illustrates an example of pixel values appearing in pixels of the sensitive surface 10 when an X-ray photon is incident. Here, to simplify the description, as shown in a region 12 including 5*5=25 pixels in the upper part of Fig. 3, description will be provided assuming that an X-ray photon is incident on a pixel 11A indicated with a left shaded portion at the center of the region 12. When the pixel 11A receives the X-ray photon, a part of signals caused by reception of the X-ray photon also appears in pixels 11B indicated with a right shaded portion around the pixel 11A by a charge sharing phenomenon specific to a semiconductor device. A region occupied by the pixel 11A and the pixels 11B in which the photoelectric conversion signals derived from the incident X-ray photon appear is different depending on the intensity of the X-ray, and the like. For example, a case is assumed where the region has 3*3=9 pixels, 5*5=25 pixels, and 7*7=49 pixels centering around the pixel 11A. What is important is that signal components leaking to the pixels 11B around the pixel 11A that is the center of incidence of the X-ray also includes information significant to perform X-ray image analysis.

The lower part of Fig. 3 shows an example of distribution of pixel signal values included in the region 12. In this manner, pixels with great signal values including signals derived from an incident photon are distributed centering around the pixel 11A on which the X-ray is incident, and pixels with erroneous signal values output due to noise are distributed in an outer edge portion thereof.

Note that as described above, a cooling mechanism such as a Peltier element may be provided in the image sensor 105 to make an operating temperature constant to reduce noise. Further, a cooling mechanism may be provided with a configuration in which the image sensor 105 is contained in a vacuum-tight container with a sensor window.

Here, an X-ray to be detected by the image sensor 105 will be discussed. As described above, in order to cause charge sharing when one X-ray photon is incident, two or more electron-hole pairs need to be generated in a semiconductor used in a photoelectric conversion element constituting the pixel with respect to incidence of one photon.

For example, according to Non Patent Literature 9, electron-hole pair generation energy $E_i$ of the semiconductor is experimentally expressed with the following equation:

[Expression 1]

$$E_i \approx 2.8E_g + 0.6 \; [eV] \qquad [1]$$

where $E_g$ is a bandgap of the semiconductor on which the X-ray is incident. As a semiconductor material to be used in detection of the X-ray, for example, silicon (Si), germanium (Ge), gallium arsenide (GaAs), gallium nitride (GaN), or cadmium telluride (CaTe) is used. According to Non Patent Literature 9, the electron-hole pair generation energy $E_i$ of these substances is approximately 3.6 eV, 2.96 eV, 4.2 eV, 8 to 10 eV and 4.43 eV respectively.

In view of the above, in order to reliably cause charge sharing in the semiconductor material to be used in detection of the X-ray, the energy of the X-ray is preferably equal to or greater than 10 eV. Note that the photon incident on the image sensor 105 is not limited to the X-ray and may be electromagnetic radiation having radiation energy of equal to or greater than 10 eV or particle radiation (charged particle radiation and non-charged particle radiation) having motion energy of equal to or greater than 10 eV, other than the X-ray.

(Image signal processing system and operation thereof)

An image signal processing system that plays a central role of the present invention and operation of the image signal processing system will be described next. In the X-ray imaging system 100 in Fig. 1, digitalized data signal group from the image data readout unit 122 are transmitted to an image signal processing unit 140 of an arithmetic unit (computer) 130 having an information processing function. The image signal processing unit 140 is configured to perform predetermined determination processing described later on the detection signal obtained from the image sensor 105 to obtain an image by X-ray imaging. In other words, the image signal processing unit 140 performs processing of removing noise components based on the present invention and supplies a high-quality image data group including only significant signals to a data compression unit 132. As a result, data compression is efficiently performed on a large amount of image data, and the compressed image data group is not only stored in a data storage unit 133 for analysis but also transmitted to an analysis center, or the like, as necessary. On the other hand, the processed image signal can be displayed on an image display unit 150 for monitoring in real time as an X-ray image.

Here, the image signal processing unit 140 receives the detection signals from the pixel 11A on which the X-ray photon is incident or the pixels 11B adjacent to the pixel on which the detection signal is generated by charge coupling on the light receiving surface of the image sensor 105. As described above, a number of pixels representing signal values other than 0 due to noise specific to the semiconductor device exist in the received data. If such pixel values due to noise are left, a data size becomes larger. The image signal processing unit 140 according to the present embodiment performs processing of separating pixels including significant information derived from the incident photon from pixels including only pixel values due to noise, correcting significant information lost by separation as necessary and removing pixel values due to noise and outputs data appropriate for data compression.

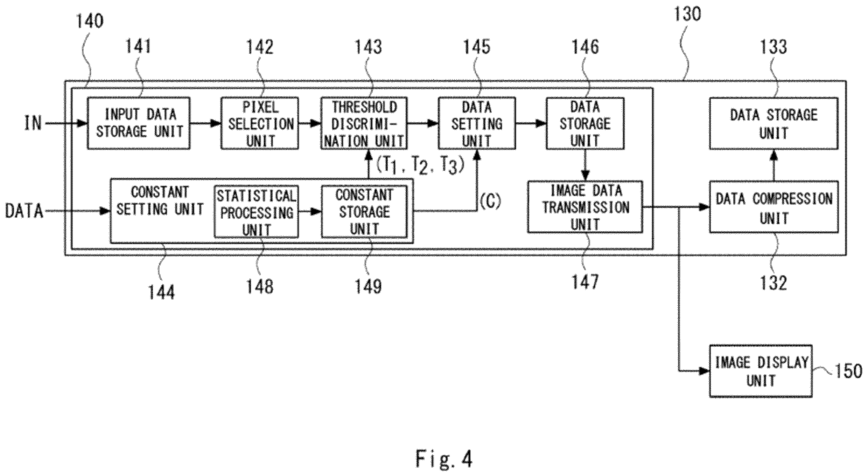

Fig. 4 schematically illustrates a functional configuration of the image signal processing unit 140. The image signal processing unit 140 includes an input data storage unit 141, a pixel selection unit 142, a threshold discrimination unit 143, a constant setting unit 144, a data setting unit 145, a data storage unit 146 and an image data transmission unit 147.

The input data storage unit 141 is, for example, constituted as a frame memory and temporarily stores image data (input data IN in Fig. 4) read from the image sensor 105. The pixel selection unit 142 selects pixels to be processed from the image data stored in the input data storage unit 141 as appropriate. As will be described later, the threshold discrimination unit 143 performs threshold discrimination processing for distinguishing significant signals from noise on the selected pixels using a constant such as a threshold read from the constant setting unit 144 (also referred to as a threshold setting unit). The constant setting unit 144 includes a statistical processing unit 148 that statistically calculates a threshold in accordance with an observation event based on experimental data, or the like, obtained in advance, and a constant storage unit 149 that stores a plurality of calculated constants. Note that the statistical processing unit 148 that calculates the threshold that is a feature of the present invention may be constituted with an independent computer. The data setting unit 145 sets output data corresponding to each pixel based on a result of threshold discrimination processing. The output data is temporarily stored in the data storage unit 146. For example, after processing of image data for one frame ends, the image data transmission unit 147 reads the output data corresponding to pixels for one frame from the data storage unit 146 and transmits the output data to the data compression unit 132 of the arithmetic unit 130 and the image display unit 150.

(Noise removal processing according to first embodiment: 2*2-sum method)

Noise removal processing at the image signal processing unit 140 according to the present embodiment will be described below. A method for noise removal processing according to the first embodiment is also referred to as a 2*2-sum method. In the 2*2-sum method, one block including M*N pixels of M pixels in a vertical direction and N pixels in a horizontal direction in the region to be processed is set as a processing target, discrimination using 2*2-sum threshold $(T_1)$ is applied to a sum of pixel values in the block region, and all pixel values within the block are left as significant information if the result is true. On the other hand, all pixel values of pixels for which all discrimination results are false are discriminated as noise and removed from the data.

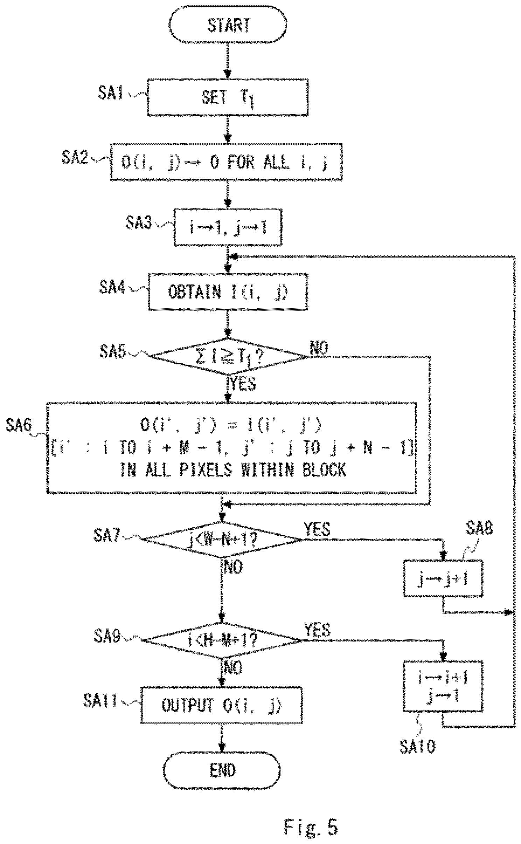

Note that an example where one block includes four pixels of two pixels in a vertical direction and two pixels in a horizontal direction will be described below. Fig. 5 illustrates a flowchart of noise removal processing at the image signal processing unit 140 in the first embodiment. Note that in the following description, in a region on the sensitive surface in which pixels to be subjected to noise removal processing by the image signal processing unit 140 are arranged, the number of pixels in a row direction (Y direction) is denoted as H, the number of pixels in a column direction (X direction) is denoted as W, a row number is denoted as i, and a column number is denoted as j. With respect to a pixel in the i-th row, the j-th column in the processing target region, a pixel value of input data is denoted as I(i, j), and a pixel value of output data is denoted as O(i, j).

Step SA1

First, the threshold discrimination unit 143 reads a 2*2-sum threshold $T_1$ for noise removal processing selected according to the corresponding observation event from the constant storage unit 149 of the constant setting unit 144 and sets the 2*2-sum threshold $T_1$ at the threshold discrimination unit 143 as a threshold to be used for threshold discrimination. The 2*2-sum threshold $T_1$ is a value statistically calculated in advance based on conditions such as physical property of a sample to be observed, intensity of the X-ray to be radiated, and a frame period at the statistical processing unit 148 included in the constant setting unit 144 and is not unambiguously determined. In other words, unlike a threshold that is unambiguously determined based on noise level characteristics specific to an image sensor, and the like, the statistically determined 2*2-sum threshold $T_1$ to be used in the present invention has a remarkable feature of being dynamically set at the threshold discrimination unit 143 by obtaining a large amount of data in advance under conditions such as physical property of a sample to be observed, intensity of the X-ray to be radiated, and a frame period, calculating these data at the statistical processing unit 148 in advance, and selecting a constant for each individual observation event from a plurality of constants stored in the constant storage unit 149.

Step SA2

The data setting unit 145 resets pixel values of the output data of the respective pixels in the processing target region, that is, sets O(i, j)=0. Note that the output data of the respective pixels is stored in the data storage unit 146, and the data setting unit 145 can update the output data as appropriate as necessary.

Step SA3

The pixel selection unit 142 sets a row number i for designating a pixel in the processing target region to 1 and sets a column number j to 1 as initial values (i=1, j=1).

Step SA4

The pixel selection unit 142 obtains a pixel value of the i-th row, the j-th column of the processing target region from the input data storage unit 141 and inputs the pixel value to the threshold discrimination unit 143 as input data I(i, j).

Step SA5

The threshold discrimination unit 143 determines whether a sum of pixel values in the block including the pixel of the i-th row, the j-th column and adjacent pixels in the processing target region is equal to or greater than 2*2-sum

threshold $T_1$. Note that it is assumed here that determination is performed on a sum of pixels included in a region from the i-th row to the "i+M-1"-th row and from the j-th column to the "j+N-1"-th column. In this case, the threshold discrimination unit 143 determines whether the following equation is satisfied.
[Expression 2]

$$\sum I = \sum_{i'=i}^{i+M-1} \sum_{j'=j}^{j+N-1} I(i', j') \geqq T_1 \qquad [2]$$

Note that in this example, the size of the block is four pixels of 2*2, and thus, equation [2] can be rewritten to the following equation.
[Expression 3]

$$\sum I = I(i, j) + I(i, j + 1) + I(i + 1, j) + I(i + 1, j + 1) \geqq T_1 \qquad [3]$$

If the determination result is false, the threshold discrimination unit 143 proceeds to step SA7.

Step SA6

If the determination result is false, the data setting unit 145 determines values of input data of the pixels included in the determined block as output data of these pixels respectively as shown in the following equation.
[Expression 4]

$$\forall (i', j') \in \{(i'', j'') \in \mathbb{N}^2 | i \leq i'' \leq i + M - 1, j \leq j'' \leq j + N - 1\},$$

$$O(i', j') = I(i', j') \qquad [4]$$

Note that in this example, the size of the block is four pixels of 2*2, and thus, equation [4] can be rewritten to the following equations.
[Expression 5]

$$O(i, j) = I(i, j) \qquad [5]$$

[Expression 6]

$$O(i, j + 1) = (i, j + 1) \qquad [6]$$

[Expression 7]

$$O(i + 1, j) = I(i + 1, j) \qquad [7]$$

[Expression 8]

$$O(i + 1, j + 1) = I(i + 1, j + 1) \qquad [8]$$

Step SA7

The pixel selection unit 142 determines whether the column number j is smaller than "W-N+1".

Step SA8

If the column number j is smaller than "W-N+1", the pixel selection unit 142 adds "1" to the column number j (j=j+1) and returns to step SA4.

Step SA9

If the column number j is equal to "W-N+1", the pixel selection unit 142 determines whether the row number i is smaller than "H-M+1".

Step SA10

If the row number i is smaller than "H-M+1", the pixel selection unit 142 adds "1" to the row number i (i=i+1), sets the column number j to "1" and returns to step SA4. If the row number i is equal to "H-M+1", the threshold discrimination unit 143 proceeds to step SA11 assuming that noise removal processing on the image data for one frame (one processing target region) has been completed.

Step SA11

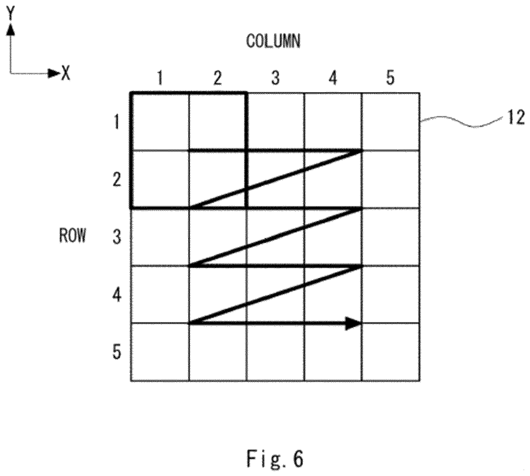

If it is determined in step SA10 that the row number i is equal to "H-1", that is, if it is determined that the noise removal processing has been completed, the image data transmission unit 147 reads output data O(i, j) after the noise removal processing has been completed from the data storage unit 146. Then, the image data transmission unit 147 reads output data of pixels in the processing target region and outputs the output data to the data compression unit 132 and the image display unit 150. The output data is written in a storage apparatus (for example, the data storage unit 133 or a storage apparatus that is not illustrated) as appropriate and can be displayed at the image display unit 150.
As a result of repetitive processing including step SA4 to step SA10 described above being performed, the processing target region (region 12 in Fig. 2) is swept by the block including four pixels including the selected pixel and adjacent three pixels. Fig. 6 illustrates the order of sweeping of the processing target region by the block including 2*2=4 pixels in the noise removal processing according to the first embodiment. As a result of the processing target region on the sensitive surface being sequentially swept by the block including four adjacent pixels in this manner, processing of data of all pixels can be performed.

(Comparison between 2*2-sum method and method in the related art)

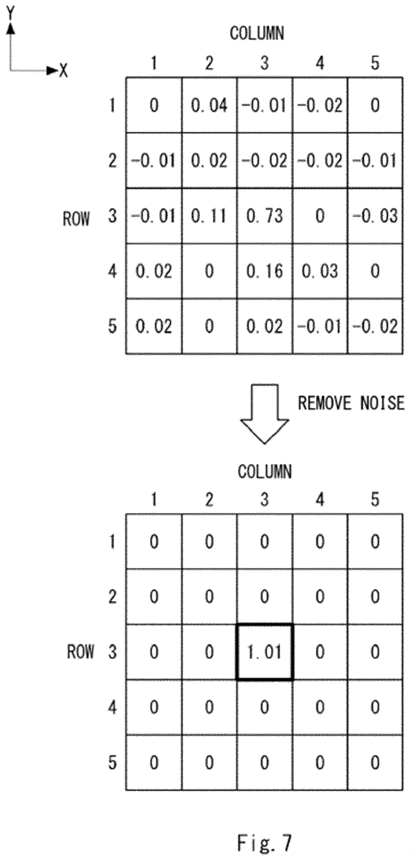

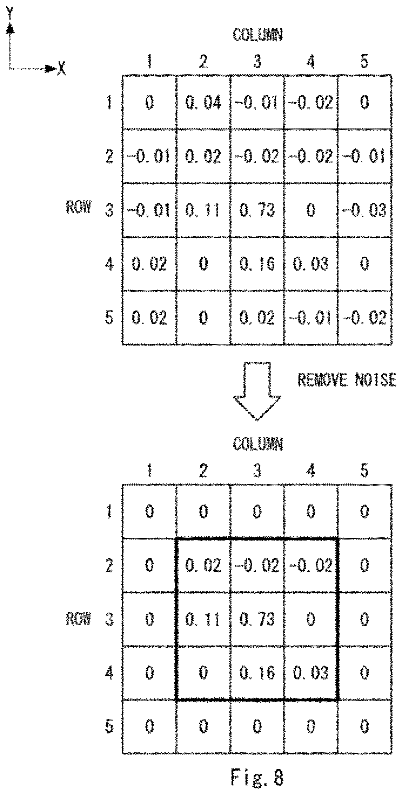

Subsequently, effects of noise processing according to the present embodiment will be described in comparison to a typical method in the related art. First, an example of noise removal processing in typical threshold discrimination will be described. Fig. 7 illustrates distribution of pixel values before noise removal and distribution of pixel values after noise removal processing by typical threshold discrimination. Note that it is assumed here that an energy amount of one incident X-ray photon is standardized to "1", and signals with intensity corresponding to the detected energy appear in the unit light receiving element on which the photon is incident and in peripheral unit light receiving elements in which charge sharing occurs. In other words, in a case where influence of noise is not taken into account, a sum of signal intensity of the unit light receiving elements in which signals appear in response to incidence of the X-ray photon is ideally equal to "1" that is the standardized energy amount of one X-ray photon.
In this example, the respective pixels are sequentially selected, a sum of pixel values of the selected pixel and adjacent pixels (up to eight pixels) is calculated, and the calculated sum is compared with the threshold. If the calculated sum is smaller than the threshold, a pixel value of the selected pixel is set at 0, and if the calculated sum is equal to or greater than the threshold, the pixel value of the selected pixel is set at the calculated sum. In this case, a sum (1.01) in a case where a pixel in the third row, the third column at the center is selected becomes greater than the threshold, and the pixel value of this pixel is set at 1.01, and pixel values of other pixels are set at 0.
This makes it possible to set the signal intensity to a value 1.01 approximated to a value "1" that should be originally detected in response to incidence of the X-ray photon while removing influence of noise, so that the signal intensity is preferably stored. However, information on signal distribution appearing in response to incidence of the X-ray photon is considerably lost, and spatial resolution of an image to be captured considerably is degraded.
Next, a case will be described where the 2*2-sum method is applied to noise distribution that is the same as that in the method in the related art. Fig. 8 illustrates distribution of pixel values before noise removal and distribution of pixel values after noise removal processing using the 2*2-sum method. In the 2*2-sum method (2*2-sum threshold $T_1=0.5Q_{ph}$ where $Q_{ph}$ is the number of electrons generated with one radiation beam and corresponds to a signal level as a pixel value. In the present comparison, it is set that $[Q_{ph}=1]$), pixel values of a pixel in the third row, the third column

(the pixel value is 0.73) and eight adjacent pixels are stored without change. A sum of the pixel values of nine pixels for which values are stored is 1.01.

Small-angle X-ray scattering simulation was performed for noise removal according to the present embodiment and the typical noise removal described above. In the simulation, photon energy of the X-ray was set at 10 KeV, an average frequency of incidence of photons within the image was set at $10^{-4}$ photons/pixel/frame, 100 images were obtained, and an average value thereof was calculated. In the typical noise removal, a degree of loss of photon signals was $-1.3*10^{-3}$, and a data compression rate was 6000. Note that the degree of loss of photon signals described here refers to a value obtained by subtracting 1 from a ratio of detected photons with respect to a total number of incident photons. On the other hand, in the 2*2-sum method according to the present embodiment, a degree of loss of photon signals was $-1.3*10^{-3}$, and it was confirmed that approximately 1000 times of a data compression rate could be achieved compared to a case where noise removal processing was not performed.

It was verified from the above that, according to the present configuration, it is possible to compress data to a level substantially equivalent to a level of a typical method while considerably reducing loss of photon signals by noise removal.

Thus, according to the present configuration, compared to a typical approach in which threshold discrimination is performed on a sum of pixel values of pixels included in a certain region, it is possible to store a sum of signal intensity, that is, accurately store information on incident energy. Further, pixel values of a large pixel and pixels in the vicinity of the pixel can be stored, so that it is possible to preferably store distribution of signal intensity. Thus, compared to a typical approach in the related art, it is possible to effectively reduce loss of significant information in association with signal processing of noise removal and perform compression processing with high signal accuracy.

Second embodiment

An X-ray image signal processing method according to the second embodiment will be described below. The X-ray imaging system according to the present embodiment has a configuration substantially similar to the configuration of the first embodiment, but as will be described below, two thresholds read from the constant setting unit 144 are set at the threshold discrimination unit 143, and a correction constant C is set at the data setting unit 145.

(Noise removal processing according to second embodiment: T2C method)

The noise removal processing according to the present embodiment, which is referred to as a threshold to correction (T2C) method, applies threshold discrimination on each pixel in two stages, and divides and adds an amount of loss of charges assumed in the threshold discrimination in the first stage (first T2C threshold $T_2$) to the threshold discrimination in the second stage (second T2C threshold $T_3$).

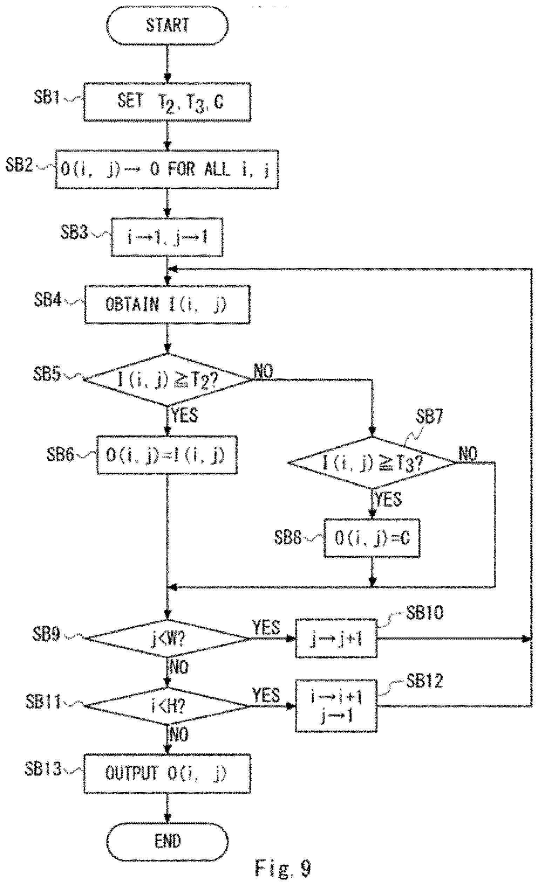

Fig. 9 illustrates a flowchart of noise removal processing according to the second embodiment. In the following description, similar to the first embodiment, in the processing target region to be subjected to noise removal processing by the image signal processing unit 240, the number of pixels in a row direction (Y direction) is denoted as H, the number of pixels in a column direction (X direction) is denoted as W, a row number is denoted as i, and a column number is denoted as j. With respect to a pixel in the i-th row, the j-th column in the processing target region, a pixel value of input data is denoted as I(i, j), and a pixel value of the output data is denoted as O(i, j).

Step SB1

As initial setting, the threshold discrimination unit 143 loads the first T2C threshold $T_2$ and the second T2C threshold $T_3$ for noise removal processing from the constant storage unit 149 of the constant setting unit 144 and sets the thresholds at the threshold discrimination unit 143 as thresholds to be used in threshold discrimination processing. Further, the data setting unit 145 loads the correction constant C from the constant storage unit 149 of the constant setting unit 144 in a similar manner. Similar to the 2*2 sum threshold $T_1$ in the first embodiment, unlike a threshold that is unambiguously determined based on noise level characteristics specific to an image sensor, and the like, the first T2C threshold $T_2$, the second T2C threshold $T_3$ and the correction constant C are obtained by statistically processing at the statistical processing unit 148 in advance, a large amount of data obtained in advance under conditions such as physical property of a sample to be observed, intensity of the X-ray to be radiated, and a frame period and are not unambiguously determined. Here, as an example, the first T2C threshold $T_2$ is set at [$T_2=14\sigma$ where $\sigma$ is a noise level specific to an image sensor], and the second T2C threshold $T_3$ is set at [$T_3=7\sigma$] lower than the first T2C threshold $T_2$.

Step SB2

The data setting unit 145 resets pixel values of output data of respective pixels in the processing target region, that is, sets O(i, j) = 0.

Step SB3

The pixel selection unit 142 sets the row number i for designating a pixel in the processing target region in the processing target region to 1 and sets the column number j to 1 as initial values (i=1, j=1).

Step SB4

The pixel selection unit 142 obtains the input data I(i, j) that is a pixel value of the i-th row, the j-th column from the input data storage unit 141 and inputs the input data to the threshold discrimination unit 143.

Step SB5

The threshold discrimination unit 143 determines whether the pixel value I(i, j) of the pixel in the i-th row, the j-th column is equal to or greater than the first T2C threshold $T_2$ (I(i, j)$\geq T_2$).

Step SB6

If it is determined at step SB5 that the pixel value I(i, j) is equal to or greater than the first T2C threshold $T_2$ (I(i, j)$\geq T_2$), the data setting unit 145 determines the pixel value I(i, j) of the pixel in the i-th row, the j-th column as the output data O(i, j) corresponding to the pixel in the i-th row, the j-th column without change as shown in the following equation.
[Expression 9]

$$O(i, j) = I(i, j) \qquad [9]$$

Step SB7

If it is determined at step SB5 that the pixel value I(i, j) is smaller than the first T2C threshold $T_2$ (I(i, j)$<T_2$), the threshold discrimination unit 143 discriminates whether the pixel value I(i, j) is equal to or greater than the second T2C threshold $T_3$ (I(i, j)$\geq T_3$). Note that if it is determined that the pixel value I(i, j) is smaller than the second T2C threshold $T_3$ (I(i, j) $< T_3$), the data setting unit 145 determines that the pixel value I(i, j) of the pixel in the i-th row, the j-th column has been affected by noise, maintains the output data O(i, j) corresponding to the pixel in the i-th row, the j-th column at 0 without change and proceeds to step SB10.

Step SB8

If it is determined at step SB7 that the pixel value I(i, j) is equal to or greater than the second T2C threshold $T_3$ (I(i, j)$\geq T_3$), the data setting unit 145 applies the correction constant C to the output data O(i, j) corresponding to the pixel in the i-th row, the j-th column (O(i, j)=C).

Step SB9

After step SB6 and step SB8, the threshold discrimination unit 143 determines whether the column number j of the pixel in the i-th row, the j-th column is smaller than "W" (j < W).

Step SB10

If the column number j of the pixel in the i-th row, the j-th column is smaller than "W", the pixel selection unit 142 adds 1 to the column number j (j=j+1) and returns to step SB4.

Step SB11

If it is determined at step SB9 that the column number j of the pixel in the i-th row, the j-th column is equal to "W" (j=W), the pixel selection unit 142 determines whether the row number i of the pixel in the i-th row, the j-th column is smaller than "H" (i<H).

Step SB12

If it is determined at step SB11 that the row number i of the pixel in the i-th row, the j-th column is smaller than "H", the pixel selection unit 142 adds 1 to the row number i (i=i+1) and returns to step SB4.

Step SB13

If it is determined at step SB12 that the row number i of the pixel in the i-th row, the j-th column is equal to "H", the image data transmission unit 147 reads output data O(i, j) after the noise removal processing is completed from the data storage unit 146. Then, the image data transmission unit 147 reads the output data of the pixels in the processing target region and outputs the output data to the data compression unit 132 and the image display unit 150. The output data is written in a storage apparatus (for example, the data storage unit 133 or a storage apparatus that is not illustrated) as appropriate and can be displayed at the image display unit 150.

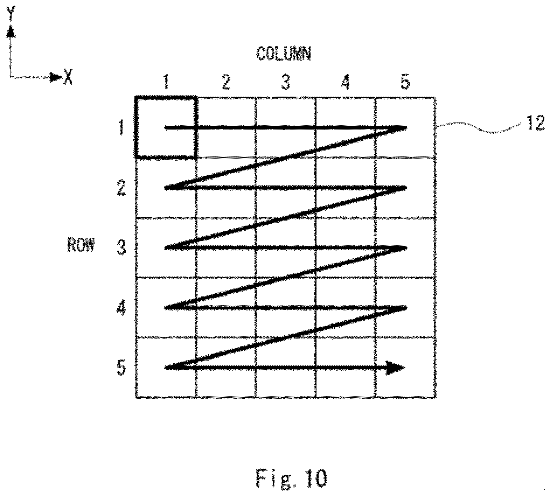

As a result of repetitive processing including step SB4 to step SB12 described above being performed, the region 12 is swept by the selected pixels. Fig. 10 illustrates the order of sweeping of the pixels in the noise removal processing according to the second embodiment. All the pixels in the region 12 can be swept by the order shown in Fig. 10.

A determination method of the correction constant C will be described next. The image signal processing unit 140 may determine the correction constant C in advance using the method described below. The pixel value I(i, j) of the i-th row, the j-th column as input data is converted into the output data O(i, j) as described below by the noise removal processing described with reference to Fig. 9.

[Expression 10]

$$O(i,j) = \begin{cases} 0 & (I(i,j) < T_2) \\ C & (T_2 \le I(i,j) < T_1) \\ I(i,j) & (T_1 \le \varSigma I) \end{cases} \qquad [10]$$

The correction constant C may be determined so that a sum of signal intensity included in the image after noise processing becomes equal to a sum of signals corresponding to the incident X-ray. In this event, the correction constant C is expressed with the following equation:

[Expression 11]

$$C = \frac{Q_{true} - \sum_{(i,j) \in U_c} I(i,j)}{\sum_{(i,j) \in U_c}} \qquad [11]$$

where $Q_{true}$ is a true value of a sum of signals corresponding to the incident X-ray. Note that in the above equation, the following relationship is established.

[Expression 12]

$$U_c = \{(i,j) | T_2 \le I(i,j) \cap \varSigma I < T_1\} \qquad [12]$$

While $Q_{true}$ cannot be known from measurement, in a case where it is assumed that noise detected at the image sensor 105 is zero in average, $Q_{true}$ can be estimated using pixel values of the image before the noise removal processing. For example, as expressed in the following equation, a sum of pixel values of the image before the noise removal processing may be used as an estimated value of $Q_{true}$.

[Expression 13]

$$Q_{true} \approx \sum_{(i,j)} I(i,j) \qquad [13]$$

In a case where noise varies greatly at the image sensor 105, a case is assumed where an error becomes greater with estimation using the above equation. In this case, for example, as expressed in the following equation, a sum of the pixel value stored after the noise removal processing according to the second embodiment and pixel values around the pixel value may be set as the estimated value of $Q_{true}$.
[Expression 14]

$$Q_{true} \approx \sum_{(i,j) \in U_t} I(i,j) \qquad [14]$$

This is because a possibility of pixel in which a signal component due to incidence of the X-ray is likely to appear is negligibly low other than around the pixel for which the value is stored after the noise removal processing by the threshold discrimination. Note that Ut refers to a set of pixels including a pixel remained after the noise removal processing (T2C) according to the present embodiment and pixels existing around the pixel.

(Comparison between T2C method and method in the related art)

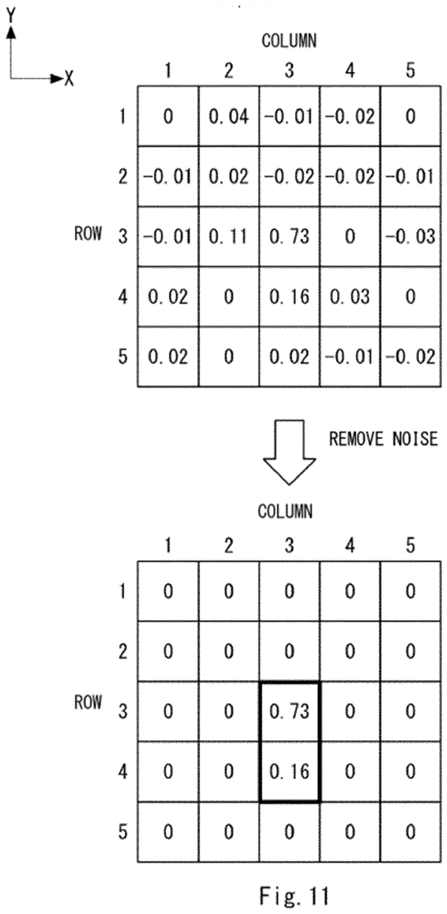

Subsequently, effects of the noise processing according to the present embodiment will be described in comparison to a typical approach. First, a noise processing example in typical threshold discrimination will be described. Fig. 11 illustrates distribution of pixel values before noise removal and distribution of pixel values after noise removal by typical threshold discrimination. Distribution of detection signals and standardization of signal intensity are similar to those in the first embodiment.

In this example, pixels that had signal intensity of 0.14 or less were processed such that pixel values were set to 0, assuming that noise appeared. In this case, only a pixel value (intensity 0.73) of a pixel in the third row, the third column and a pixel value (0.16) of a pixel in the fourth row, the third column were stored, and values of other pixels were corrected to 0.

This can remove influence of noise, but a sum of signal intensity after noise removal becomes 0.73+0.16=0.89, which is smaller than "1" that should be originally detected in association with incidence of the X-ray photon by 0.11, and information on incident energy is considerably lost. This leads to variation of a sum of intensity of remaining signals for the X-ray photon incident on different positions. Further, information on signal distribution appearing in association with incidence of the X-ray photon is also considerably lost, which considerably degrades spatial resolution of an image to be captured.

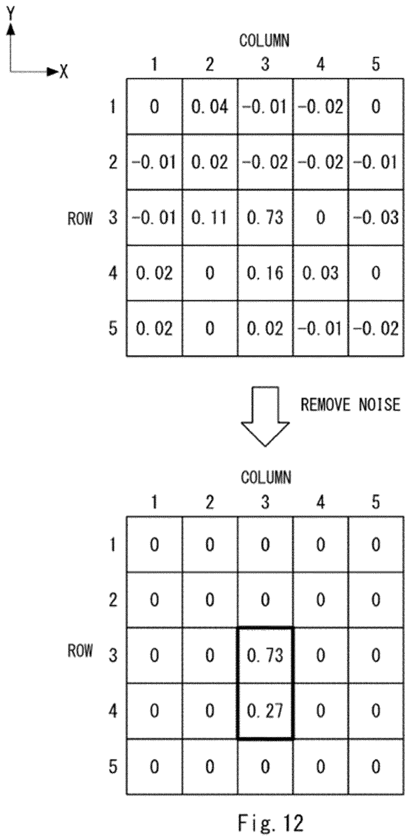

Fig. 12 illustrates distribution of pixel values before noise removal and distribution of pixel values after noise removal processing using the T2C method. In the present embodiment, for a pixel (pixel value 0.73) in the third row, the third column, the pixel value is equal to or greater than the first threshold $T_2$, and the pixel value is stored without change. Further, for a pixel (pixel value 0.16) in the fourth row, the third column, the pixel value is smaller than the first threshold $T_2$ and greater than the second threshold 0.15, and thus, the pixel value is corrected to 0.27 by the correction constant C at step SB5. Thus, a sum of the pixel values of the pixel in the third row, the third column and the pixel in the fourth row, the third column is 1.

Small-angle X-ray scattering simulation was performed for noise removal according to the second embodiment and typical noise removal. Conditions, and the like, of the simulation are similar to those in the first embodiment, and thus, description thereof will be omitted. In the typical noise removal, a degree of loss of photon signals was $6.0*10^{-2}$, and a data compression rate was $3.3*10^3$. On the other hand, in the noise removal (T2C method) according to the second embodiment, a degree of loss of photon signals considerably decreased to $0.5*10^{-3}$, and a data compression rate that is equivalent to the data compression rate in the method in the related art was obtained.

It was verified from above that according to the present configuration, it is possible to compress data more effectively than the typical approach while considerably reducing loss of photon signals by noise removal.

This makes it possible to store a sum of signal intensity, that is, accurately store information on incident energy compared to a case where typical threshold discrimination is performed for each pixel.

Third embodiment

Noise removal processing according to the third embodiment will be described. The noise removal processing according to the present embodiment is a combination of the 2*2-sum and the T2C method described above. Here, the noise removal processing is also referred to as an integrated method.

An X-ray imaging system according to the present embodiment has a configuration substantially similar to that of the first embodiment, but as will be described below, two thresholds are set to the threshold discrimination unit 143 by the constant setting unit 144, and the correction constant C is set to the data setting unit 145. (Noise removal processing according to third embodiment: integrated method)

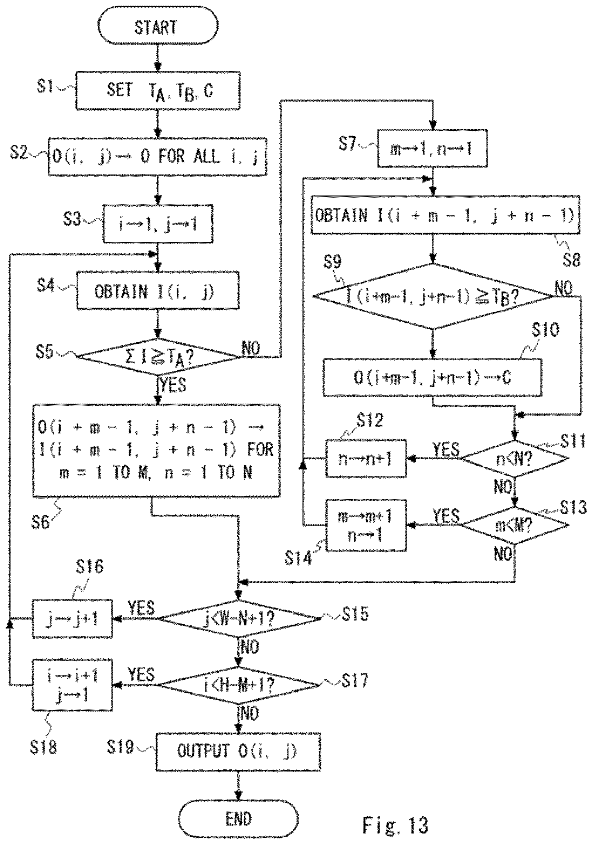

An X-ray image signal processing method according to the third embodiment will be described below. Fig. 13 illustrates a flowchart of noise removal processing (integrated method) according to the third embodiment. In the integrated method, threshold discrimination is performed using 2*2-sum, and if a result of the threshold discrimination is false, threshold discrimination is further performed using the T2C method. Further, in other words, the integrated method may be viewed as a method in which threshold discrimination and data setting in the first stage are performed using the T2C method in a similar manner to the 2*2-sum method, and if a result of the threshold discrimination in the first stage is false, threshold discrimination in the second stage is performed on respective pixels within a block using the 2*2-sum method. In other words, by combining threshold discrimination for each pixel and threshold discrimination on a sum of pixel values within a predetermined region, even if pixel signals with largely different intensity are mixed, it is possible to remove noise components while maintaining accuracy of an image signal.

Step S1

As initial setting, the threshold discrimination unit 143 loads a 2*2 sum threshold $T_A$ and a T2C threshold $T_B$ for noise removal processing from the constant setting unit 144 and sets the thresholds as thresholds to be used for threshold discrimination processing. Further, the data setting unit 145 loads the correction constant C from the constant setting unit 144. The 2*2 sum threshold $T_A$ in the present embodiment corresponds to the 2*2 sum threshold $T_1$ according to the first embodiment, and the T2C threshold $T_B$ corresponds to the second T2C threshold $T_3$ according to the second embodiment.

Step S2 to step S4

Step S2 to step S4 are similar to step SA2 to step SA4 (Fig. 5) according to the first embodiment respectively, and thus, description thereof will be omitted.

Step S5

The threshold discrimination unit 143 determines whether a sum of pixel values in a block including the pixel in the i-th row, the j-th column and adjacent pixels in the processing target region is equal to or greater than the 2*2-sum threshold $T_A$. Note that it is assumed here that in a similar manner to step SA5 (Fig. 5) according to the first embodiment, determination is performed on a sum of pixels included in a region from the i-th row to the "i+M-1 "-th row and from the j-th column to the "j+N-1"-th column.

Step S6

Step S6 is similar to step SA6 (Fig. 5) according to the first embodiment, and thus, description thereof will be omitted.

Step S7

If a determination result at step S5 is false, that is, if a sum of pixel values in a region including the pixel in the i-th row, the j-th column and adjacent pixels is smaller than the 2*2 sum threshold $T_A$, the pixel selection unit 142 sets an in-block row number m to 1 and sets an in-block column number n to 1 (m=1, n=1).

Step S8

The pixel selection unit 142 obtains a pixel value in the (i+m-1)-th row, the (j+n-1)-th column from the input data storage unit 141.

Step S9

The threshold discrimination unit 143 determines whether the pixel value in the (i+m-1)-th row, the (j+n-1)-th column is equal to or greater than the T2C threshold $T_B$ ($I(i+m-1, j+n-1) \geq T_B$).

Step S10

If the pixel value I is equal to or greater than the T2C threshold $T_B$ ($i+m-1, j+n-1 \geq T_B$), the data setting unit 145

**EP 4 425 219 A1**

applies the correction constant C to output data O(i+m-1, j+n-1) (O(i+m-1, j+n-1)=C).

Step S1

The pixel selection unit 142 determines whether the in-block column number n is smaller than "N".

Step S12

If the in-block column number n is smaller than "N", the pixel selection unit 142 adds "1" to the in-block column number n (n=n+1) and returns to step S8.

Step S13

If the in-block column number n is equal to "N", the pixel selection unit 142 determines whether the in-block row number m is smaller than "M". If the in-block row number m is equal to "M", the pixel selection unit 142 proceeds to step S15.

Step S14

If the in-block row number m is smaller than "M", the pixel selection unit 142 adds "1" to the in-block row number m (m=m+1), sets the in-block column number n to "1" and returns to step S8.

Step S15 to step S19

Step S15 to step S16 are similar to step SA7 to step SA11 (Fig. 5) according to the first embodiment respectively except that the processing is returned to step S4 after step S16 and step S18, and thus, description thereof will be omitted.
As a result of repetitive processing including step S4 to step S17 described above being performed, the sensitive surface 10 is swept by an M*N pixel region including the selected pixel. Fig. 6 illustrates the order of sweeping of the target region on the sensitive surface when the M*N pixels are set as one block in the noise removal processing according to the first embodiment. For sake of simplicity, it is set in Fig. 7 that M=N=2. With the sensitive surface being sequentially swept for a unit region including M*N pixels in this manner, processing of data of all pixels can be performed.
As described above, according to the present configuration, by applying T2C to the block after threshold discrimination is performed for each block using the 2*2-sum method, it is possible to perform data setting for each pixel within the block more finely than in a case of the first embodiment. This makes it possible to remove noise while maintaining signal distribution in the input data.

Other embodiments

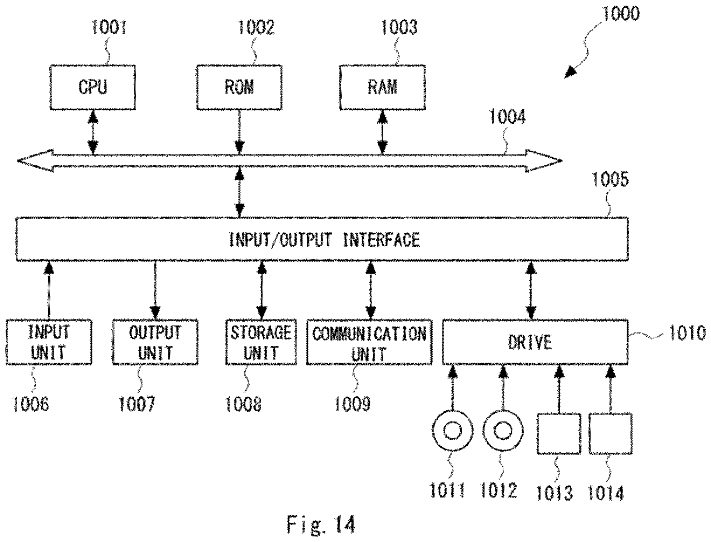

The present invention is not limited to the above-described embodiments and can be modified as appropriate within a range not deviating from the gist. For example, while a configuration of each unit of the X-ray imaging system including the image signal processing unit has been mainly described as a configuration of hardware, the present invention is not limited to this, and processing at each unit of the X-ray imaging system may be achieved by causing a central processing unit (CPU) to execute a computer program. The program includes commands (or software codes) that cause a computer to execute one or more functions described in the above-described embodiments when loaded to the computer. The program may be implemented and executed on an electric circuit within a detector. For example, the program may be implemented by an integrated circuit within the sensor, a field-programmable gate array (FPGA), an application specific integrated circuit (ASIC), or the like, within the detector. Further, the program may be stored in a non-transitory computer-readable medium or a tangible storage medium or may be provided as package software or a program product that can be downloaded.
The above-described computer can be a special purpose computer, a personal computer (PC), or the like. Fig. 14 illustrates a configuration example of a computer 1000. However, the computer does not have to be a physically single computer, and a plurality of computers may be provided for distribution processing. As illustrated in Fig. 14, the computer 1000 includes a central processing unit (CPU) 1001, a read only memory (ROM) 1002, and a random access memory (RAM) 1003, which are connected to each other via a bus 1004. Note that while description of OS software, or the like, for causing the computer to operate is omitted, it is assumed that a computer that constructs this information processing apparatus naturally has the OS software, or the like.
An input/output interface 1005 is also connected to the bus 1004. For example, an input unit 1006 including a keyboard, a mouse, a sensor, and the like, an output unit 1007 including a display such as a CRT, an LCD, and the like, and a headphone, a speaker, and the like, a storage unit 1008 constituted with a hard disk, and the like, a communication unit 1009 constituted with a modem, a terminal adapter, and the like, are connected to the input/output interface 1005.

The CPU 1001 executes various kinds of processing in accordance with various kinds of programs stored in the ROM 1002 or various kinds of programs loaded to the RAM 1003 from the storage unit 1008, and in the present embodiment, for example, processing of respective units of the X-ray imaging system described later. It is also possible to provide a graphics processing unit (GPU), an FPGA or an ASIC separately from the CPU 1001 and cause them to perform processing similar to the processing of the CPU 1001. Note that the GPU is suitable for application in which routine processing is performed in parallel, and by applying the GPU to learning processing, or the like, which will be described later, it is also possible to improve processing speed compared to the CPU 1001. Further, by implementing processing at the FPGA and the ASIC, it is possible to perform processing at higher speed and lower power consumption than the CPU 1001. Data required for the CPU 1001 and the GPU to execute various kinds of processing is also stored in the RAM 1003 as appropriate.

The communication unit 1009, for example, performs communication processing via the Internet (not illustrated), transmits data provided from the CPU 1001, and outputs data received from a communication partner to the CPU 1001, the RAM 1003 or the storage unit 1008. The storage unit 1008 communicates with the CPU 1001 and stores or deletes information. The communication unit 1009 performs communication processing with other apparatuses using an analog signal or a digital signal.

A drive 1010 is connected to the input/output interface 1005 as necessary, and, for example, a magnetic disk 1011, an optical disk 1012, a flexible disk 1013, a semiconductor memory 1014, or the like, is mounted as appropriate, and a computer program read from these is installed in the storage unit 1008 as necessary.

Further, while in the above-described embodiments, the X-ray imaging system has been described as a typical example, the present invention can be widely applied to other radiation imaging systems using a semiconductor image sensor. Incidentally, efficient data compression for storing data is also important processing in a small X-ray imaging system using an X-ray tube with small output as a radiation source, and thus, the noise removal processing according to the present invention is extremely beneficial. Further, the present invention can also be applied to an image apparatus employing an indirect imaging scheme which captures an image in a form in which an X-ray image is converted into a visible light image using a scintillator as well as an image apparatus employing a direct imaging scheme using X-ray radiation.

The imaging scheme in the X-ray imaging system according to the above-described embodiments can also be applied to a case where a neutron ray is captured using an image scheme of a direct imaging scheme through radiation of an electron ray, for example, with an electronic microscope or a semiconductor image sensor coated with a thin film containing boron as a main element.

Further, in the above-described embodiments, a pixel value of a single pixel or a sum of pixel values within a 2*2 pixel region is set as a target of threshold discrimination, the target pixel region is not limited to these. For example, a sum of pixel values within an M*N pixel region, and a sum of pixel values within a pixel region along a pre-estimated trajectory of radiation incident on a detector may be set as the target of threshold discrimination. Such threshold discrimination is, for example, particularly beneficial in detection of an electron ray, a neutron ray, charged particle radiation and a high-energy X-ray.

Note that the 2*2-sum method described as the first embodiment is suitable for image processing of radiation observation using a relatively high-energy radiation source (spring-8 angstrom compact free electron laser (SACLA)), or the like, in a synchrotron radiation facility at which the present inventor works. On the other hand, the T2C method described as the second embodiment is suitable for image processing of radiation observation using a relatively small-energy radiation source. Further, the integrated method described as the third embodiment is suitable for use as software by being constituted as a general-purpose computer program.

While in the above-described embodiments, discrimination by comparing between the threshold and the pixel value has been described, in a case where the pixel value is equal to the threshold, the pixel value may be treated as either exceeding the threshold or falling below the threshold. In other words, in a case where two determination results are obtained by performing determination as to whether one value is greater or smaller than the other, if the one value is equal to the other value, the determination result may be included in either of the two determination results as necessary.

This application claims the priority based on Japanese Patent Application No. 2021-175897 filed on October 27, 2021, the entire disclosure of which is incorporated herein by reference.


**Reference Signs List**

    10 SENSITIVE SURFACE
    11, 11A, 11B PIXEL

12 REGION
100 X-RAY IMAGING SYSTEM
101 X-RAY SOURCE
102 X-RAY ATTENUATION PLATE
103 SAMPLE
104 SAMPLE HOLDER
105 IMAGE SENSOR
106 X-RAY INTENSITY CONTROL UNIT
107 INSERTION AND REMOVAL STAGE
108 SAMPLE STAGE
109 STAGE CONTROL UNIT
120 CAMERA CONTROL UNIT
121 EXPOSURE PERIOD CONTROL UNIT
122 IMAGE DATA READOUT UNIT
130 ARITHMETIC UNIT
132 DATA COMPRESSION UNIT
133 DATA STORAGE UNIT
140 IMAGE SIGNAL PROCESSING UNIT
141 INPUT DATA STORAGE UNIT
142 PIXEL SELECTION UNIT
143 THRESHOLD DISCRIMINATION UNIT
144 CONSTANT SETTING UNIT
145 DATA SETTING UNIT
146 DATA STORAGE UNIT
147 IMAGE DATA TRANSMISSION UNIT
148 STATISTICAL PROCESSING UNIT
149 CONSTANT STORAGE UNIT
150 IMAGE DISPLAY UNIT
1000 COMPUTER
1001 CENTRAL PROCESSING UNIT (CPU)
1002 READ ONLY MEMORY (ROM)
1003 RANDOM ACCESS MEMORY (RAM)
1004 BUS
1005 INPUT/OUTPUT INTERFACE
1006 INPUT UNIT
1007 OUTPUT UNIT
1008 STORAGE UNIT
1009 COMMUNICATION UNIT
1010 DRIVE
1011 MAGNETIC DISK
1012 OPTICAL DISK
1013 FLEXIBLE DISK
1014 SEMICONDUCTOR MEMORY

**Claims**

1. A radiation image signal processing method in a radiation imaging system which includes an image sensor having a sensitive surface on which a plurality of pixels are two-dimensionally arranged, the system outputting signals electrically converted at the pixels in response to incidence of radiation containing image information as pixel values, the radiation image signal processing method comprising:

   separating one or more pixels that output significant electrical conversion signals derived from incident radiation from pixels that output only signals due to noise specific to a sensor device based on a threshold that is statistically determined in advance; and
   removing pixel values due to noise and outputting pixel values of significant signals as radiation image data.

2. The radiation image signal processing method according to claim 1, comprising:

adding pixel values of four pixels in a block including two pixels in a vertical direction and two pixels in a horizontal direction adjacent each other to each pixel signal value from the image sensor and obtaining a sum of the pixel values; and

sequentially comparing the sum with a predetermined threshold and removing pixel values due to noise in unit of the block.

3. The radiation image signal processing method according to claim 2, comprising:

if the sum is equal to or greater than the predetermined threshold, maintaining the pixel values of the four pixels in the block as significant signals; and
determining pixel values of pixels for which the sum is smaller than the predetermined threshold as noise in determination of all blocks and removing the pixel values.

4. The radiation image signal processing method according to claim 1, comprising:

comparing an output signal for each pixel from the image sensor with a first threshold that is statistically determined as a noise level and obtaining an image signal after removing pixel values of noise components;
comparing pixel values of pixels having pixel values smaller than the first threshold with a second threshold that is smaller than the first threshold;
generating an image signal by adding a correction value that is statistically determined to the pixel values of pixels having pixel values that are smaller than the first threshold and equal to or greater than the second threshold; and
outputting the image signal of the pixel values of the pixels to which the correction value is added along with an image signal of pixels having pixel values equal to or greater than the first threshold.

5. The radiation image signal processing method according to claim 1, wherein the threshold that is statistically determined is dynamically set as a threshold for each individual event in which radiation image observation is performed.

6. A radiation image signal processing apparatus in a radiation imaging system which includes an image sensor having a sensitive surface on which a plurality of pixels are two-dimensionally arranged, the system outputting signals electrically converted at the pixels in response to radiation incident as image information as pixel values, the radiation image signal processing apparatus comprising:

a constant setting unit configured to determine a threshold for detecting noise components appearing in the respective pixels; and
a threshold discrimination unit configured to discriminate pixels that output significant electrical conversion signals derived from incident radiation from pixels that output only signals due to noise specific to a sensor device based on the threshold from the constant setting unit,
wherein the constant setting unit sets a signal obtained by statistically processing data obtained in advance to the threshold discrimination unit as the threshold.

7. The radiation image signal processing apparatus according to claim 6, wherein the constant setting unit comprises:

a statistical processing unit configured to statistically process a plurality of data experimentally obtained in advance to calculate a plurality of constants; and
a constant storage unit configured to store the plurality of calculated constants,
wherein the constant setting unit sets a constant selected for each observation event to the threshold discrimination unit as a threshold.

8. A radiation imaging system comprising:

a radiation source configured to irradiate an observation sample with radiation;
a camera unit including an image sensor having a sensitive surface on which a plurality of pixels are two-dimensionally arranged; and
an image signal processing unit configured to output signals electrically converted at the pixels in response to incidence of radiation containing information on the observation sample as pixel values, wherein
the image signal processing unit comprises:

a constant setting unit configured to determine a threshold for detecting noise components appearing in the respective pixels; and

a threshold discrimination unit configured to discriminate pixels that output significant electrical conversion signals derived from radiation from pixels that output only signals due to noise specific to a sensor device based on the threshold from the constant setting unit, and

the constant setting unit sets a signal obtained by statistically processing data obtained in advance to the threshold discrimination unit as the threshold.

9. The radiation imaging system according to claim 8, wherein
the constant setting unit comprises:

a statistical processing unit configured to statistically process a plurality of data experimentally obtained in advance to calculate a plurality of constants; and

a constant storage unit configured to store the plurality of calculated constants,

wherein the constant setting unit sets a constant selected for each observation event to the threshold discrimination unit as a threshold.

10. A program in a radiation imaging system which includes an image sensor having a sensitive surface on which a plurality of pixels are two-dimensionally arranged, the system outputting signals electrically converted at the pixels in response to incidence of radiation containing image information as pixel values, the program causing a computer included in the radiation imaging system to execute:

processing of separating one or more pixels that output significant electrical conversion signals derived from incident radiation from pixels that output only signals due to noise specific to a sensor device based on a threshold that is statistically determined in advance; and

processing of removing pixel values due to noise and outputting pixel values of significant signals as radiation image data.

Fig. 1

EP 4 425 219 A1

Y

X

10

12

11

Fig. 2

Fig. 3

Fig. 4

Fig. 5

Fig. 6

Y

COLUMN

|   | 1 | 2 | 3 | 4 | 5 |
|---|---|---|---|---|---|
| 1 | 0 | 0.04 | -0.01 | -0.02 | 0 |
| 2 | -0.01 | 0.02 | -0.02 | -0.02 | -0.01 |
| 3 | -0.01 | 0.11 | 0.73 | 0 | -0.03 |
| 4 | 0.02 | 0 | 0.16 | 0.03 | 0 |
| 5 | 0.02 | 0 | 0.02 | -0.01 | -0.02 |

ROW

REMOVE NOISE

COLUMN

|   | 1 | 2 | 3 | 4 | 5 |
|---|---|---|---|---|---|
| 1 | 0 | 0 | 0 | 0 | 0 |
| 2 | 0 | 0 | 0 | 0 | 0 |
| 3 | 0 | 0 | 1.01 | 0 | 0 |
| 4 | 0 | 0 | 0 | 0 | 0 |
| 5 | 0 | 0 | 0 | 0 | 0 |

ROW

Fig. 7

27

Y

X

COLUMN

|  | 1 | 2 | 3 | 4 | 5 |
|---|---|---|---|---|---|
| 1 | 0 | 0.04 | -0.01 | -0.02 | 0 |
| 2 | -0.01 | 0.02 | -0.02 | -0.02 | -0.01 |
| ROW 3 | -0.01 | 0.11 | 0.73 | 0 | -0.03 |
| 4 | 0.02 | 0 | 0.16 | 0.03 | 0 |
| 5 | 0.02 | 0 | 0.02 | -0.01 | -0.02 |

REMOVE NOISE

COLUMN

|  | 1 | 2 | 3 | 4 | 5 |
|---|---|---|---|---|---|
| 1 | 0 | 0 | 0 | 0 | 0 |
| 2 | 0 | 0.02 | -0.02 | -0.02 | 0 |
| ROW 3 | 0 | 0.11 | 0.73 | 0 | 0 |
| 4 | 0 | 0 | 0.16 | 0.03 | 0 |
| 5 | 0 | 0 | 0 | 0 | 0 |

Fig. 8

28

START

SB1 — SET $T_2$, $T_3$, C

SB2 — O(i, j) → 0 FOR ALL i, j

SB3 — i→1, j→1

SB4 — OBTAIN I(i, j)

SB5 — I(i, j) ≧ $T_2$?

NO

YES

SB6 — O(i, j)=I(i, j)

SB7 — I(i, j) ≧ $T_3$?

NO

YES

SB8 — O(i, j)=C

SB9 — j<W?

YES

SB10 — j→j+1

NO

SB11 — i<H?

YES

SB12 — i→i+1 j→1

NO

SB13 — OUTPUT O(i, j)

END

Fig. 9

Fig. 10

Y

X

COLUMN

|   | 1 | 2 | 3 | 4 | 5 |
|---|---|---|---|---|---|
| 1 | 0 | 0.04 | -0.01 | -0.02 | 0 |
| 2 | -0.01 | 0.02 | -0.02 | -0.02 | -0.01 |
| 3 | -0.01 | 0.11 | 0.73 | 0 | -0.03 |
| 4 | 0.02 | 0 | 0.16 | 0.03 | 0 |
| 5 | 0.02 | 0 | 0.02 | -0.01 | -0.02 |

ROW

REMOVE NOISE

COLUMN

|   | 1 | 2 | 3 | 4 | 5 |
|---|---|---|---|---|---|
| 1 | 0 | 0 | 0 | 0 | 0 |
| 2 | 0 | 0 | 0 | 0 | 0 |
| 3 | 0 | 0 | 0.73 | 0 | 0 |
| 4 | 0 | 0 | 0.16 | 0 | 0 |
| 5 | 0 | 0 | 0 | 0 | 0 |

ROW

Fig. 11

Y

X

COLUMN

|   | 1 | 2 | 3 | 4 | 5 |
|---|---|---|---|---|---|
| 1 | 0 | 0.04 | -0.01 | -0.02 | 0 |
| 2 | -0.01 | 0.02 | -0.02 | -0.02 | -0.01 |
| 3 | -0.01 | 0.11 | 0.73 | 0 | -0.03 |
| 4 | 0.02 | 0 | 0.16 | 0.03 | 0 |
| 5 | 0.02 | 0 | 0.02 | -0.01 | -0.02 |

ROW

REMOVE NOISE

COLUMN

|   | 1 | 2 | 3 | 4 | 5 |
|---|---|---|---|---|---|
| 1 | 0 | 0 | 0 | 0 | 0 |
| 2 | 0 | 0 | 0 | 0 | 0 |
| 3 | 0 | 0 | 0.73 | 0 | 0 |
| 4 | 0 | 0 | 0.27 | 0 | 0 |
| 5 | 0 | 0 | 0 | 0 | 0 |

ROW

Fig. 12

Fig. 13

Fig. 14

## INTERNATIONAL SEARCH REPORT

International application No.

**PCT/JP2022/037976**

| A. | CLASSIFICATION OF SUBJECT MATTER |
|---|---|

***G01T 1/17***(2006.01)i; ***G01T 1/20***(2006.01)i; ***G01T 1/24***(2006.01)i
FI:   G01T1/17 C; G01T1/24; G01T1/20 E; G01T1/20 G; G01T1/20 F

According to International Patent Classification (IPC) or to both national classification and IPC

| B. | FIELDS SEARCHED |
|---|---|

Minimum documentation searched (classification system followed by classification symbols)

G01T1/00-1/16; G01T1/167-7/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2014-183475 A (CANON INC.) 29 September 2014 (2014-09-29) | 1, 6, 8, 10 |
| | paragraphs [0004], [0025]-[0038], fig. 5-7 | |
| A | | 2-5, 7, 9 |
| A | JP 2012-137460 A (HITACHI, LTD.) 19 July 2012 (2012-07-19) entire text, all drawings | 1-10 |
| A | JP 2008-224609 A (HAMAMATSU PHOTONICS K.K.) 25 September 2008 (2008-09-25) entire text, all drawings | 1-10 |
| A | JP 2017-000566 A (CANON INC.) 05 January 2017 (2017-01-05) entire text, all drawings | 1-10 |
| A | JP 2017-009504 A (RIGAKU CORP.) 12 January 2017 (2017-01-12) paragraph [0026], fig. 3 | 1-10 |
| A | US 2014/185781 A1 (REITZ, Silke, SPAHN, Martin) 03 July 2014 (2014-07-03) entire text, all drawings | 1-10 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2022** | **29 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/037976**

| Patent document cited in search report | | | Publication date (day/month/year) | Patent family member(s) | | | Publication date (day/month/year) |
|---|---|---|---|---|---|---|---|
| JP | 2014-183475 | A | 29 September 2014 | US 2014/0285689 A1 paragraphs [0006], [0035]-[0048], fig. 5-7 | | | |
| JP | 2012-137460 | A | 19 July 2012 | US 2013/0270448 A1 entire text, all drawings WO 2012/090992 A1 | | | |
| JP | 2008-224609 | A | 25 September 2008 | (Family: none) | | | |
| JP | 2017-000566 | A | 05 January 2017 | US 2016/0366353 A1 entire text, all drawings | | | |
| JP | 2017-009504 | A | 12 January 2017 | US 2016/0377749 A1 paragraph [0043], fig. 3 EP 3109677 A1 CN 106290433 A | | | |
| US | 2014/0185781 | A1 | 03 July 2014 | US 2016/0334521 A1 entire text, all drawings DE 102013200021 A1 | | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019064632 A
- JP 2021175897 A

### Non-patent literature cited in the description

- **M. HAMMER et al.** Strategies for on-chip digital data compression for X-ray pixel detectors. *Journal of Instrumentation,* 16 January 2021, 01025
- **CH. BROENNIMANN et al.** The PILATUS 1M detector. *Journal of Synchrotron Radiation,* 2006, vol. 13 (2), 120-130
- **V. RADICCI et al.** The International School for Advanced Studies (SISSA), find out more EIGER a new single photon counting detector for X-ray applications: performance of the chip. *Journal of Instrumentation,* 2012, vol. 7, C02019
- **J. HOFF et al.** An on-chip charge cluster reconstruction technique in the miniVIPIC pixel readout chip for X-ray counting and timing. *Proceedings in 2014 IEEE, Nuclear Science Symposium and Medical Imaging Conference (NSS/MIC,* 1173-1183
- **S. CARTIER et al.** Micrometer-resolution imaging using MONCH: towards G2-less grating interferometry. *Journal of Synchrotron Radiation,* 2016, vol. 23, 1462-1473
- **S. CARTIER.** Development of a 25 micron pixel detector for phase-contrast imaging. *PhD thesis,* 2017
- **G. W. DEPTUCH et al.** An Algorithm of an X-ray Hit Allocation to a Single Pixel in a Cluster and Its Test-Circuit Implementation. *IEEE Transactions on Circuits and Systems I (TCSI),* 2018, vol. 65 (1), 185-197
- **J. JIRSA et al.** Simulation of New Charge Summing and Hit Allocation Algorithm. *Proceedings of Science, Topical Workshop on Electronics for Particle Physics*
- **H. SPIELER.** Semiconductor Detector Systems. Oxford University Press, 2005